Europäisches Patentamt

European Patent Office

Office européen des brevets

(19)

(11) Publication number: **0 236 604 B1**

## (12) EUROPEAN PATENT SPECIFICATION

(45) Date of publication of patent specification: **10.07.91**  (51) Int. Cl.⁵: **G02F 1/11**

(21) Application number: **86301623.4**

(22) Date of filing: **07.03.86**

(54) **Acousto-optic tunable filter with two acoustic channels.**

(43) Date of publication of application:
**16.09.87 Bulletin  87/38**

(45) Publication of the grant of the patent:
**10.07.91 Bulletin  91/28**

(84) Designated Contracting States:
**DE FR GB IT**

(56) References cited:
**US-A- 3 679 288**
**US-A- 4 505 550**

**APPLIED OPTICS, vol. 15, no. 9, September
1976, pages 2250-2258, New York, US; T.
YANO et al.: "Acoustooptic TeO2 tunable
filter using far-off-axis anisotropic Bragg dif-
fraction"**

(73) Proprietor: **WESTINGHOUSE ELECTRIC COR-
PORATION**
**Westinghouse Building Gateway Center
Pittsburgh Pennsylvania 15235(US)**

(72) Inventor: **Ryan, Frederick Mark**
**RD-1, Box 84**
**New Alexandria Pennsylvania(US)**
Inventor: **Feldman, Donald William**
**6445 Nicholson Street**
**Pittsburgh Pennsylvania(US)**
Inventor: **Gottleib, Milton**
**2310 Marbury Road**
**Pittsburgh Pennsylvania(US)**

(74) Representative: **van Berlyn, Ronald Gilbert**
**23, Centre Heights**
**London, NW3 6JG(GB)**

**Description**

The present invention relates to an acousto-optic tunable filter (AOTF) configuration which extends the tuning range of the filter. Additionally, the invention provides a method for extending the tuning range of an acousto-optic tunable filter.

The term acousto-optic filter refers to the fact that in certain birefringent optical materials, a light beam propagating as an E-ray can, under certain conditions, be converted into an O-ray by interaction with, and diffraction from, an acoustic wave propagating in the same medium. This phenomenon has been utilized in producing narrow band optical filters, the peak transmission wavelength of which can be selected by properly choosing the frequency of the acoustic wave. The center wavelength of the passband of the acousto-optic filter is electronically tunable by changing the frequency of the acoustic wave within the crystal.

Two basic types of tunable acousto-optic filters have been constructed: collinear and non-collinear. A collinear acousto-optic filter is disclosed in the specification of U.S. Patent No. 3,679,288 concerned primarily with the collinear filter, in which the incident and diffracted light beams inside the birefringent crystal are collinear with the acoustic beam. A diffracted light beam at the selected passband is separated from the incident light beam with a polarizing beam splitter. In the non-collinear filter, the light beams inside the birefringent crystal are non-collinear with the acoustic beam. The specification of U.S. Patent No. 4,052,121 teaches that an electronically tunable optic filter with large angular aperture can be obtained by utilizing the interaction of optical and acoustic beams that propagate non-collinearly in an anisotropic medium. Incident light of one polarization is diffracted by the acoustic wave in an orthogonal polarization over an optical passband, the center of which can be tuned by changing the acoustic frequency (U.S. Patent Nos. 3,679,288 and 4,052,121).

Both collinear and non-collinear filters possess unique advantages and liabilities. In general, the collinear acousto-optic tunable filter will yield a higher resolution but the extraction of the filtered light output will require a polarizing beam splitter. The non-collinear acousto-optic tunable filter is often more convenient to use because there is some angular separation between the incident and the filtered light. It may be difficult to achieve high resolution with non-collinear filters of reasonable geometry, but for many applications, the achievable results are more than adequate.

The development of new efficient infrared acousto-optic materials such as thallium-arsenic-selenide (Tl$_3$AsSe$_3$) as described in the specification of U.S. Patent No. 3,792,287; thallium-phosphorus-selenide in the specification of U.S. Patent No. 3,929,970; and thallium-arsenic-sulfide in the specification of U.S. Patent 3,799,659 provide the possibility of operation over the near-to-mid infrared range of from about 1.3 micrometers to about 16 micrometers. The crystal Tl$_3$AsSe$_3$ - (TAS) provides a relatively high figure of merit and transmits from 1.25 to 16 $\mu$m. In addition, the crystal symmetry of the TAS crystal makes it particularly suitable for use in non-collinear applications. While the TAS crystal possesses a relatively high figure of merit and extended transmission range, the optical wavelength range capability of the device is limited by the RF range capability of the acoustic transducer structure. The full optical range of a typical TAS AOTF design requires an RF bandwidth from 12.4 to 91 MHz, which cannot be readily done with a single transducer structure. The usable fractional bandwidth of the transducer will generally never exceed 100%, and will almost always be less due to practical limitations. It is often desirable to operate a single acousto-optic tunable filter with as large as possible a wavelength coverage and this may require an RF bandwidth greater than 100%. There have been several posed solutions to increasing the bandwidth capability of an acousto-optic device. For example, in the specification of U.S. Patent No. 3,759,603 discloses an acousto-optical light deflector having increased bandwidth by the use of providing three transducers along one side of the crystal, which transducers operate at consecutive frequency ranges. Such a structural configuration, however, requires the use of an optical medium of increased dimensions. Typically, as the size of the crystal increases in both length and width, problems are encountered in both the optical quality and mechanical integrity of the medium, and the device fabrication becomes more difficult.

An object of the present invention is to provide an acousto-optic tunable filter configuration in which the range coverage may be doubled without the corresponding increase in crystal size.

According to the present invention, a method of extending the tuning range of a non-collinear acousto-optic tunable filter comprises the steps of introducing incident light into the acousto-optic tunable filter comprising a crystal having an optical input face, an optical output face and first and second parallel sides, selectively launching acoustic waves having a center frequency f$_1$ into said crystal from said crystal first side, which acoustic waves are propagating in a first direction so that interaction with said incident light results in the absorption of a phonon, and selectively launching acoustic waves having a center frequency f$_2$ into said crystal from said crystal second side, which acoustic waves propagate in a second direction which is anti-parallel to said first direction such that interaction with said incident light results in the stimulated emission of a phonon.

The invention also includes a non-collinear acousto-optic tunable filter having extended an tuning range comprising a crystal having an optical input face, an optical output face and first and second parallel sides which serve as transducer faces, a first transducer means of a predetermined thickness for operating at center frequency $f_1$ mounted on said first parallel side, and a second transducer means of a predetermined thickness for operating at a center frequency $f_2$ mounted on said second parallel side; wherein acoustic waves launched into said crystal from said first transducer means propagate in a first direction so that interaction with incident light in said crystal results in the absorption of a phonon and acoustic waves launched into said crystal from said second transducer means propagate in a second direction which is anti-parallel to said first direction such that interaction with said incident light results in the stimulated emission of a phonon.

Conveniently, the new configuration, a non-collinear acousto-optic tunable filter crystal has a first transducer bonded to one transducer face of the crystal and a second transducer bonded on the opposite crystal face which crystal face is cut so as to be parallel to the first transducer. The first transducer is fabricated to the proper thickness to operate at a center frequency $f_1$ and the second transducer is fabricated so as to operate at a center frequency $f_2$. The method of extending the tuning range of the acousto-optic tunable filter comprises the steps of: introducing incident light into the acousto-optic tunable filter which filter comprises a crystal having an optical input face, an optical output face and first and second parallel sides. Acoustic waves having a center frequency $f_1$ are launched into the crystal from the crystal's first side. These acoustic waves propagate in a first direction such that the interaction of the acoustic wave with the light results in the absorption of a phonon by the incident light. Acoustic waves having a center frequency $f_2$ are launched into the crystal from the crystal's second side. The acoustic waves of a center frequency $f_2$ propagate in a second direction which is anti-parallel to the first direction such that the interaction with the light by the second series of acoustic waves results in the stimulated emission of a phonon.

The invention will now be described, by way of example, with reference to the accompanying drawings in which:

Figure 1 is a schematic representation of a non-collinear acousto-optic tunable filter illustrating both the structure and functional operation; and

Figure 2 is a wave vector diagram for acousto-optical interaction in a non-collinear filter utilizing a negative, uni-axial crystal such as thallium-arsenic-selenide.

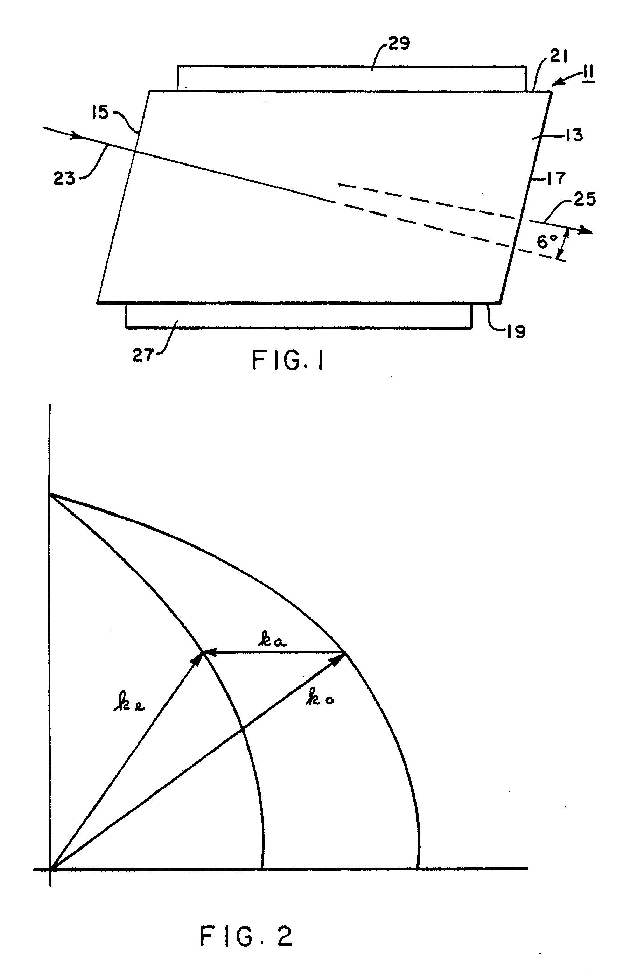

An acousto-optic tunable filter with two acoustic channels is schematically illustrated in Figure 1 and indicated as 11. A non-collinear AOTF crystal 13 has an optical input face 15, an optical output face 17, and first and second parallel sides 19 and 21, respectively. The present material of choice for the AOTF crystal 13 is thallium-arsenic-selenide, $Tl_3AsSe_3$. The input optical face 15 of the crystal 13 is cut so as to be normal to the incident light beam 23, while the output beam is diffracted at an angle of about $6°$ to the incident beam as at 25. The exit optical face 17 is cut so as to be normal to this diffracted beam. A first acoustic transducer 27 is bonded to one of the opposed parallel side surfaces of the crystal 13, as at parallel side 19. The transducer 27 preferably consists of an x-cut lithium niobate crystal plate which is efficiently coupled to the acoustic crystal. A conductive electrode pattern is provided on the lithium niobate transducer substrate. This transducer is driven by an RF system which will be described hereinafter. The acousto-optic crystal 13 is designed such that crystalline b-c axes are contained in the optical plane of incidence in the crystal and the optical beam is propagated at a selected angle which for the material described above has typically been about $30°$ relative to the crystallographic c or optic axis. The acoustic energy from the transducer 27 is propagated nearly normal to the optical beam propagation direction. When RF power is applied to the transducer, the input infrared radiation is propagated along a path at a predetermined angle to the optic axis of the crystal and a narrow passband frequency selectively interacts with the acoustic wave. The polarization of this selected or tuned optical frequency radiation is rotated $90°$ from the unfiltered beam. This selected or tuned narrow passband infrared radiation is also distinguishable from the remaining input radiation because it is shifted or diffracted at a small angle relative to the unaffected input radiation path, such as the $6°$ offset described above. Thus, the filtered light can be separated either spatially due to this offset angle without the use of an output polarizer or by means of an output polarizer. The angular relationship between the input radiation beam and the crystalline c or optic axis is not critical and can be varied, but variation will affect the specific RF tuning frequency which is used to filter or tune the desired narrow bandwidth wavelength of interest.

Based on the relationship of the crystalline axis and the propagation of sound waves with respect to the incident light in the crystal, it had been believed that only a single transducer acousto-optic tunable filter could function efficiently. As described in the background of the invention portion of the specification, it was the practice to utilize multiple transducers along a single face of the crystal. However, when more than a single transducer was utilized, it was generally necessary to approximately square the volume of the crystal in order to have proper interaction of the acoustic wave with the incident light. The present invention improves upon the acousto-optic tunable filter by providing a single acousto-optic tunable filter crystal in which the wavelength coverage may be doubled over that in the usual configuration, i.e., single transducer, without any increase in crystal size.

The new configuration illustrated in Figure 1 comprises the non-collinear ATOF crystal in which a transducer is bonded not only on the usual transducer face as at 19 but also on the opposite face 21, which is cut so as to be parallel to the first face. The first transducer is fabricated to the proper thickness to operate at a center frequency $f_1$, and the second transducer 29 on face 21 is fabricated to the proper thickness in order to operate at a center frequency $f_2$. The selected center frequencies may be chosen to yield a continuous range of coverage, or for example, they may be chosen to cover two non-contiguous ranges if that is desirable. For example, two distinct ranges of interest in the infrared are 2 to 5 $\mu$m and 8 to 12 $\mu$m. The two transducers may be driven from a single RF power source, with appropriate matching electrical network, or it may prove more desirable to drive them independently.

An understanding of the operation of the acousto-optic tunable filter according to this invention requires a description of vector phase matching properties between the optical and acoustic waves. The wave vector diagram for a negative, uni-axial crystal such as the thallium-arsenic-selenide crystal, is shown in Figure 2. As illustrated in this vector diagram, the incident light is O-polarized, the filtered light is E-polarized, and conservation of momentum is satisfied for the acoustic wave propagating right to left. For this case, conservation of energy would require that the diffracted, i.e., filtered light be higher in frequency than the incident light by an amount equal to the acoustic frequency. This can be considered roughly analogous to a doppler shift. For a two-transducer AOTF as described above, the direction of propagation of the acoustic wave from the second transducer is anti-parallel to that of the first transducer. It would thus appear that in order to satisfy conservation of momentum, the incident light must be E-polarized and filtered light O-polarized. If this were the case, the AOTF could not operate with both acoustic channels, since the incident light polarization must be only one or the other. However, we have found that this is not the case. This is based in the fact that quantum mechanics dictates that the probability of an acoustic phonon being absorbed (O-polarization → to E-polarization) is essentially equal to the probability of a phonon being emitted. The only difference is that for the latter process, the frequency of the diffracted light would be reduced by the acoustic frequency. For most acousto-optic tunable filter operations, the small difference in optical frequency will be of no consequence. The crucial result obtained through the use of this invention is that an acousto-optic tunable filter may be presented with light of either E- polarization or O-polarization, and the tuning relationship will be satisfied for an acoustic wave propagating at the optimized direction, or anti-parallel to it as from the second transducer on the opposite face of the crystal.

The use of the two-transducer structure described above provides a method for extending the tuning range of an acoustic optic filter. One transducer operates the acousto-optic tunable filter by an interaction with the light wave involving the absorption of a phonon. The opposite transducer operates the AOTF by the stimulated emission of a phonon. By constructing these two transducers to cover different acoustic wavelength ranges, the light wavelength coverage of the acousto-optic tunable filter is extended. The increased light wavelength coverage is obtained without the use of an increased crystal size which necessitates the production of optically pure and mechanically strong crystals as well as the obvious increase of the device size. What has been described is an improved acousto-optic tunable filter with two acoustic channels provided through the use of transducers disposed on opposed parallel faces of the crystal.

## Claims

1. A method of extending the tuning range of a non-collinear acousto-optic tunable filter comprising the steps of introducing incident light into the acousto-optic tunable filter comprising a crystal having an optical input face, an optical output face and first and second parallel sides, selectively launching acoustic waves having a center frequency $f_1$ into said crystal from said crystal first side, which acoustic waves are propagating in a first direction so that interaction with said incident light results in the absorption of a phonon, and selectively launching acoustic waves having a center frequency $f_2$ into said crystal from said crystal second side, which acoustic waves propagate in a second direction which is anti-parallel to said first direction such that interaction with said incident light results in the stimulated emission of a phonon.

2. A method as claimed in claim 1 wherein the selectively launched acoustic waves having a center frequency $f_1$ and the selectively launched acoustic waves having a center frequency $f_2$ are simultaneously launched into the crystal.

3. A non-collinear acousto-optic tunable filter having extended tuning range comprising: a crystal (13) having an optical input face (15), an optical output face (17) and first and second parallel sides (18,21) which serve as transducer faces, a first transducer means (27) of a predetermined thickness for operating at center frequency $f_1$ mounted on said first parallel side (19), and a second transducer means (29) of a predetermined thickness for operating at a center frequency $f_2$ mounted on said second parallel side (21); wherein acoustic waves launched into said crystal from said first transducer means (27) propagate in a first direction so that interaction with incident light in said crystal results in the absorption of a phonon and acoustic waves launched into said crystal from said second transducer means (29) propagate in a second direction which is anti-parallel to said first direction such that interaction with said incident light (23) results in the stimulated emission of a phonon.

## Revendications

1. Procédé d'élargissement de la plage d'accord d'un filtre acousto-optique accordable non colinéaire, comprenant les étapes suivantes : l'introduction de lumière incidente dans le filtre acousto-optique accordable comprenant un cristal ayant une face optique d'entrée, une face optique de sortie et un premier et un second côté parallèle, le lancement sélectif d'ondes acoustiques ayant une fréquence centrale $f_1$ dans le cristal depuis le premier côté du cristal, ces ondes acoustiques se propageant dans une première direction afin que l'interaction avec la lumière incidente provoque l'absorption d'un phonon, et le lancement sélectif d'ondes acoustiques ayant une fréquence centrale $f_2$ dans le cristal à partir du second côté de celui-ci, les ondes acoustiques se propageant dans une seconde direction qui est anti-parallèle à la première direction afin que l'interaction avec la lumière incidente provoque l'émission stimulée d'un phonon.

2. Procédé selon la revendication 1, dans lequel les ondes acoustiques lancées sélectivement ayant la fréquence centrale $f_1$ et les ondes acoustiques lancées sélectivement, ayant la fréquence centrale $f_2$, sont lancées simultanément dans le cristal.

3. Filtre acousto-optique accordable non colinéaire ayant une plage élargie d'accord, comprenant un cristal (13) ayant une face optique d'entrée (15), une face optique de sortie (17) et un premier et un second côté parallèle (19, 21) qui constituent des faces pour des transducteurs, un premier dispositif transducteur (27) d'épaisseur prédéterminée, destiné à travailler à une fréquence centrale $f_1$ et monté sur un premier côté parallèle (19), et un second dispositif transducteur (29) d'épaisseur prédéterminée destiné à travailler à une fréquence centrale $f_2$ et monté sur le second côté parallèle (21), et dans lequel des ondes acoustiques lancées dans le cristal par le premier dispositif transducteur (27) se propagent dans une première direction afin que l'interaction avec la lumière incidente dans le cristal provoque l'absorption d'un phonon et des ondes acoustiques lancées dans le cristal par le second dispositif transducteur (29) se propagent dans une seconde direction qui est antiparallèle à la première direction, d'une manière telle que l'interaction avec la lumière incidente (23) provoque l'émission stimulée d'un phonon.

## Ansprüche

1. Verfahren zum Verbreitern des Abstimmbereichs eines nicht-colinearen, akustooptischen, abstimmbaren Filters, mit den folgenden Verfahrensschritten: Einspeisen von einfallendem Licht in den akustooptischen, abstimmbaren Filter, der einen Kristall mit einer optischen Eintrittsfläche, einer optischen Austrittsfläche und einer ersten und zweiten Parallelseite aufweist, selektives Einspeisen von Schallwellen mit einer Mittelfrequenz $f_1$ in den Kristall von der ersten Kristallseite her, wobei die Schallwellen sich in einer ersten Richtung ausbreiten, so daß die Wechselwirkung mit dem einfallenden Licht die Absorption eines Phonons bewirkt, und selektives Einspeisen von Schallwellen mit einer Mittelfrequenz $f_2$ in den Kristall von der zweiten Kristallseite her, wobei die Schallwellen sich in einer zweiten Richtung ausbreiten, die zur ersten Richtung antiparallel ist, so daß die Wechselwirkung mit dem einfallenden Licht die stimulierte Emission eines Phonons bewirkt.

**2.** Verfahren nach Anspruch 1, wobei die selektiv eingespeisten Schallwellen mit den beiden Mittelfrequenzen $f_1$ und $f_2$ gleichzeitig in den Kristall eingespeist werden.

**3.** Nicht-colinearer, akustooptischer, abstimmbarer Filter mit vergrößertem Abstimmbereich mit: einem Kristall (13) mit einer optischen Eintrittsfläche (15), einer optischen Austrittsfläche (17) und ersten und zweiten parallelen Seiten (18, 21), die als Wandlerflächen dienen, einem ersten Wandler (27) mit vorgegebener Dicke, der bei der Mittelfrequenz $f_1$ arbeitet und auf der ersten Parallelseite (19) angeordnet ist, und einem zweiten Wandler (29) mit vorgegebener Dicke, der bei einer Mittelfrequenz $f_2$ arbeitet und auf der zweiten Parallelseite (21) angeordnet ist; wobei die in den Kristall vom ersten Wandler (27) eingespeisten Schallwellen sich in einer ersten Richtung ausbreiten, so daß die Wechselwirkung mit einfallendem Licht in dem Kristall die Absorption eines Phonons bewirkt, und wobei die von dem zweiten Wandler (29) in den Kristall eingespeisten Schallwellen sich in einer zweiten Richtung ausbreiten, die zur ersten Richtung antiparallel ist, so daß die Wechselwirkung mit dem einfallenden Licht (23) die stimulierte Emission eines Phonons bewirkt.

FIG. 1

FIG. 2